# EUROPÄISCHE PATENTANMELDUNG

(11) **EP 3 033 947 A1**
(43) Veröffentlichungstag der Anmeldung: **22.06.2016**
(21) Anmeldenummer: 15200331.5
(22) Anmeldetag: 16.12.2015
(51) Int. Cl.: A23G 3/34, A23G 3/10, A23G 3/50, A23G 3/56, D01D 5/18

(54) **VERFAHREN UND VORRICHTUNG ZUR FORMGEBUNG VON ERZEUGNISSEN AUS ZUCKERWATTE**

(30) Priorität: 17.12.2014 DE 102014118838
(71) Anmelder: Kölüs, Marton, 10719 Berlin (DE)
(72) Erfinder: Kölüs, Marton, 10719 Berlin (DE)
(74) Vertreter: Gulde & Partner

(57) **Zusammenfassung**

Die Erfindung beschreibt ein Verfahren und eine Vorrichtung zur Formgebung von Erzeugnissen aus Zuckerwatte.

Das erfindungsgemäße Verfahren basiert darauf, dass in dem Auffangraum einer Zuckerwanne mit Spinnkopf und Haube, eine Luftfeuchtigkeit von 40 % bis 75 %, vorzugsweise zwischen 50 % und 60 %, eingestellt wird und unter Einsatz eines weiteren Stabes der Zuckerwattegrundkörper seitlich eingedrückt wird zur Erzeugung eines ersten Zuckerwatteformkörpers, auf dem ersten Zuckerwatteformkörper ein zweiter Zuckerwattegrundkörpers aufgetragen wird und durch erneutes seitliches Eindrücken zur zweiter Zuckerwatteformkörper erzeugt wird und darüber hinaus gegebenenfalls auf dem zweiten und jedem weiteren Zuckerwatteformkörper ein weiterer Zuckerwattegrundkörper aufgetragen und durch erneutes seitliches Eindrücken zur Erzeugung eines weiteren Zuckerwatteformkörpers erzeugt wird.

Die Vorrichtung einer Zuckerwanne mit Spinnkopf ist dadurch gekennzeichnet, dass der Spinnkopf senkrecht angeordnet ist und der Innenraum mit einem Luftbefeuchter verbunden ist.

## Beschreibung

Die Erfindung betrifft ein Verfahren und Vorrichtung zur Formgebung von Erzeugnissen aus Zuckerwatte und ist anwendbar auf die Herstellung von Zuckerwatte kombiniert mit verschiedenen Gestaltungsmöglichkeiten der Zuckerwatte, beispielsweise einem Blumen-, Herz-, Stern- oder Hutmotiv.

Die Funktion von einer Zuckerwanne und das traditionelle Verfahren zur Herstellung von Zuckerwatte ist aus dem Stand der Technik hinlänglich bekannt.

Das Funktionsprinzip einer bekannten Zuckerwattemaschine mit enthaltener Zuckerwanne ist wie folgt:

Durch Betätigung eines Einschaltknopfes wird Zucker erhitzt. Aus dem geschmolzenen Zucker werden Zuckerfäden gewonnen, die durch Rotation eines Spinnkopfes ausgebracht und in eine Auffangschale ausgeworfen werden. Dort werden die Zuckerfäden mithilfe eines geeigneten Stabes aufgefangen.

Aus der DE 3838026 A1 ist eine Vorrichtung zur Herstellung von Zuckerwatte bekannt, die es ermöglicht, gestreifte Zuckerwatte mittels einer oberen und einer unteren Kammer, die unabhängig voneinander geschmolzenen Zucker erzeugen, herzustellen und dabei verschiedene Farben zu realisieren.

Bei der vorliegenden Lösung herrscht im Innenraum, in dem die Zuckerwattefäden nach Erhitzung senkrecht nach oben austreten, eine bestimmte Luftfeuchtigkeit.

Der Erfindung liegt die Aufgabe zugrunde, ein Verfahren und eine Vorrichtung zu schaffen, welche eine einfache und zuverlässige Herstellung und Formgebung von Erzeugnissen aus Zuckerwatte in vielfältigen unterschiedlichen Gestaltungsformen ermöglichen und auf einer einfachen Konstruktion basieren.

Diese Aufgabe wird gelöst durch die Merkmale der Erfindung in den Ansprüchen 1, 6 und 7. Zweckmäßige Ausgestaltungen der Erfindung sind in den Unteransprüchen enthalten.

Ein besonderer Vorteil der Erfindung besteht darin, dass den Zuckerfäden einfach und zuverlässig auf einem Stab eine Form gegeben werden kann, indem im Auffangraum durch zugeführte Feuchtluft eine Luftfeuchtigkeit von 40 % bis75 %, vorzugsweise zwischen 50 % und 60 %, eingestellt wird.

Vorher laufen die Verfahrensschritte
- Erhitzen von Zucker und Erzeugung von Zuckerfäden aus dem geschmolzenen Zucker
- durch Rotation eines Spinnkopfes Ausbringen der Zuckerfäden in senkrechte Richtung nach oben in einen Auffangraum
- Auffangen der Zuckerfäden mit mindestens einem in rechtwinkligem oder geneigtem Winkel zu den Zuckerfäden gedrehten Stab zur Herstellung des Zuckerwattegrundkörpers in kugelförmiger, ellipsoidischer, kegelförmiger oder zylindrischer Gestalt
ab.

Nachfolgend wird unter Einsatz eines weiteren Stabes der Zuckerwattegrundkörper seitlich zur Erzeugung eines ersten Zuckerwatteformkörpers eingedrückt. Auf dem ersten Zuckerwatteformkörper wird dann ein zweiter Zuckerwattegrundkörper aufgetragen und durch erneutes seitliches Eindrücken ein zweiter Zuckerwatteformkörpers erzeugt. Gegebenenfalls wird auf dem zweiten und jedem weiteren Zuckerwatteformkörper ein weiterer Zuckerwattegrundkörper aufgebracht und durch erneutes seitliches Eindrücken ein weiterer Zuckerwatteformkörpers erzeugt.

Zum Erhitzen des Zuckers sollte die Temperatur vorteilshafterweise im Bereich von 100 °C bis 200 °C liegen, vorzugsweise 150 °C betragen.

Bei niedrigen Außentemperaturen und insbesondere bei einer Umgebungstemperatur unterhalb von +4° C ist es zweckmäßig, angewärmte Feuchtluft zuzuführen. Die Temperatur der erwärmten Feuchtluft ist einstellbar und liegt im Bereich von +10°C bis +40°C und beträgt vorzugsweise 20°C.

Für die Ästhetik noch ansprechender werden die Erzeugnisse aus Zuckerwatte dann, wenn dem zu schmelzendem Zucker Lebensmittelfarbstoffe zugegeben werden, um den/die Zuckerwattegrundkörper und/oder Zuckerwatteformkörper einzufärben.

Noch bessere Ergebnisse zur Formgebung werden erzielt, wenn die Luftfeuchtigkeit im Auffangraum aus kaltem oder angewärmtes Wasser erzeugt wird. Das Wasser kann destilliertes Wasser sein.

Ein weiterer Vorteil der Erfindung besteht darin, dass die erfindungsgemäße Zuckerwanne mit Spinnkopf und einer Haube sowohl bei Neuinstallationen eingesetzt werden kann als auch bei der Nachrüstung an bestehenden Anlagen.

Zur Formgebung von Erzeugnissen aus Zuckerwatte in einer Zuckerwanne mit Spinnkopf und einer Haube ist der Spinnkopf senkrecht angeordnet und der von Zuckerwatte und Haube gebildeten Innenraum mit einem Luftbefeuchter verbunden.

Vorzugsweise kann die Verbindung zwischen Innenraum und Luftbefeuchter über Düsen realisiert sein.

Die Erfindung soll nachstehend anhand von zumindest teilweise in den Figuren dargestellten Ausführungsbeispielen näher erläutert werden. Es zeigen:
- Figur 1: die erfindungsgemäße Zuckerwanne mit Spinnkopf, Haube und Luftbefeuchter aus seitlicher Sicht,
- Figur 2: die erfindungsgemäße Zuckerwanne mit Spinnkopf, Haube und Düsen aus seitlich oberer Sicht,
- Figur 3: ein Erzeugnis der erfindungsgemäßen Zuckerwanne,
- Figur 4: eine Anordnung von Leiteinrichtungen,
- Figur 5: einen Spinnkopf mitAustrittsschlitzen am oberen Spinnkopfbereich,
- Figur 6: einen Spinnkopf mit umlaufender Lochblende,
- Figur 7: einen Spinnkopf mit schräg angeordneten Flügel, und
- Figur 8: eine Zuckerwanne mit Spinnkopf ohne Haube.

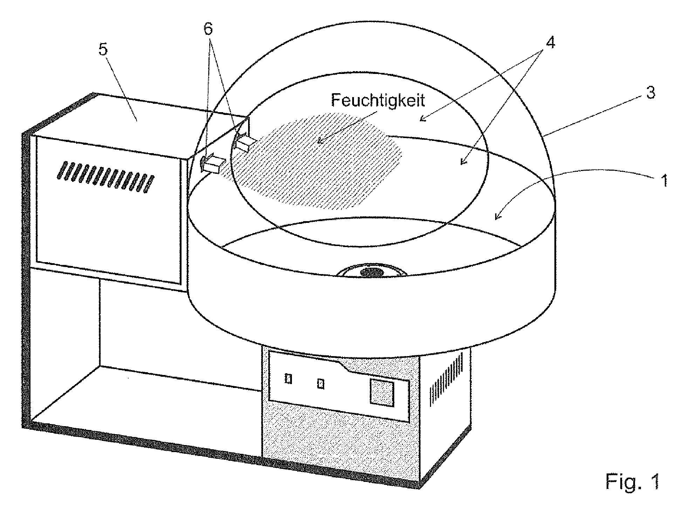

Figur 1 zeigt die erfindungsgemäße Zuckerwanne 1 mit Haube 3, wobei der von der Zuckerwanne 1 und Haube 3 gebildete Innenraum 4 durch eine Öffnung mit dem Luftbefeuchter 5 verbunden ist, wobei die Verbindung im vorliegenden Ausführungsbeispiel mit Düsen 6 realisiert ist.

Die Haube 4 ist teilweise offen, was die Bedienung der Vorrichtung ermöglicht.

Unter der Zuckerwanne 1 ist ein Erhitzungsgerät montiert, welches eingespeisten Zucker durch Erhitzung schmilzt.

Im Ausströmbereich des Luftbefeuchters 5 herrscht eine eingestellte Luftfeuchtigkeit der Feuchtluft im Bereich von 40 % bis 75 %. Die Einstellung der Luftfeuchtigkeit kann direkt am Luftbefeuchter 5 manuell erfolgen oder beispielsweise auf einer Gesamtkonsole, auf der alle Einstellungen zur Bedienung der erfindungsgemäßen Vorrichtung vorgenommen werden können (Beleuchtung, Luftfeuchtigkeit, Temperatur zum Erhitzendes Zuckers und der Feuchtluft, Farbeinstellung der eingespeisten Lebensmittelfarbe, Drehgeschwindigkeit und - richtung des Spindelkopfes 2 usw.).

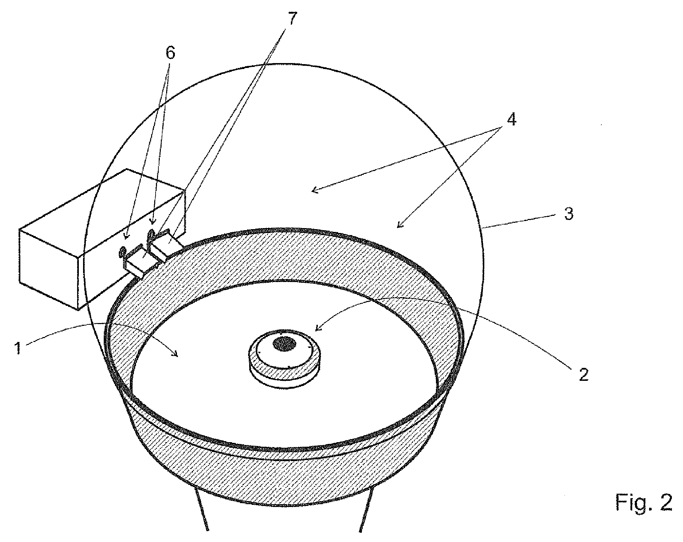

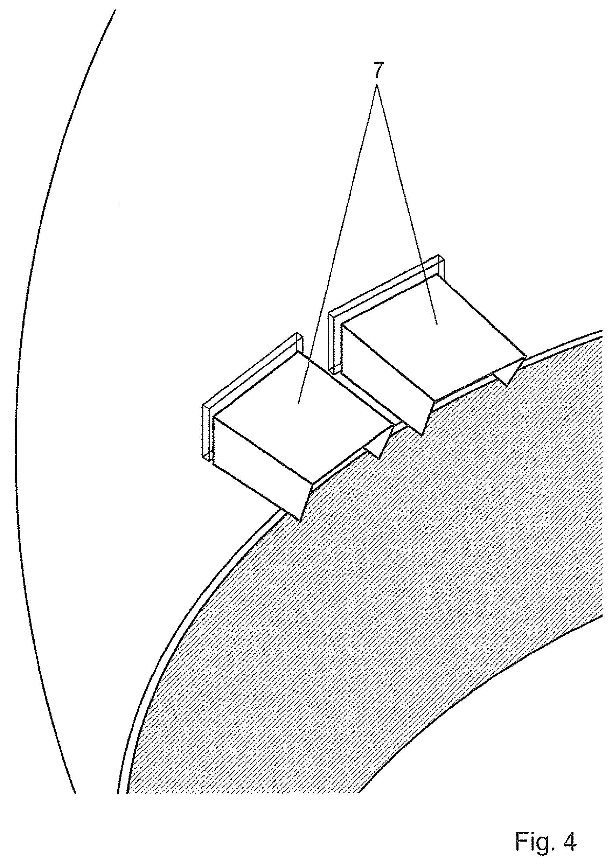

Figur 2 zeigt die die Anordnung des Spinnkopfes 2 im Mittelpunkt der kreisförmigen Zuckerwanne 1. Der geschmolzene Zucker tritt hier senkrecht nach oben aus. Durch die Rotation des Spinnkopfes 2 wirken Zentrifugalkräfte auf den Zucker und er wird vom Spinnkopf 2 weggeschleudert. Dadurch erstarrt der Zucker zu Zuckerwattefäden. Dieser Prozess geschieht im Wirkbereich des Luftbefeuchters 5, der durch die Düsen 6 und daran anordenbaren Leiteinrichtungen 7 beeinflusst werden kann. Die Leiteinrichtungen 7 sind in Figur 4 im Detail dargestellt.

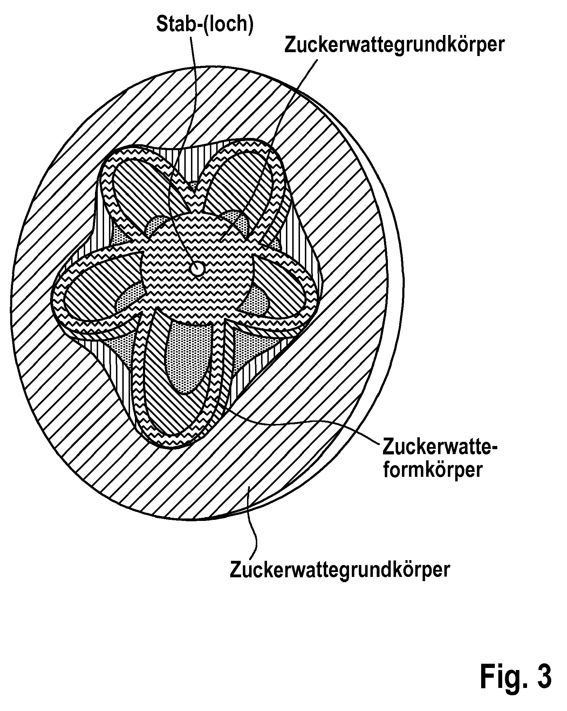

Figur 3 bildet das durch das Verfahren hergestellte Erzeugnis aus Zuckerwatte ab. Durch Auffangen der in Figur 2 beschriebenen hergestellten Zuckerwattefäden mittels rechtwinklig oder mindestens geneigt zu den vom Spinnkopf 2 weggeschleuderten Zuckerwattefäden angelegten Auffangstab, ist das Zuckerwatteerzeugnis nach dem erfindungsgemäßen Verfahren erzeugt worden.

In dem Auffangraum herrscht durch den Luftbefeuchter eine eingestellte Luftfeuchtigkeit. Diese ist zwischen 40 % bis 75 % ausgelegt, vorzugsweise zwischen 50 % und 60 % und im Optimalfall bei 52 % an der Stelle, wo die Zuckerfäden mit dem Stab aufgefangen werden. Die Temperatur zur Erhitzung des Zuckers beträgt 150 °C

Bei niedrigen Außentemperaturen wird angewärmte Feuchtluft zugeführt, wobei die Temperatur im Bereich von +10°C bis +40°C liegt und vorzugsweise +20°C beträgt.

Der Auffangstab kann aus verschiedenem Material bestehen, z. B. aus Bambus oder ein ähnliches Holz, Papier, Pappe, Plastik, Metall.

Es kann auch Druckluft oder Druckwasser zur Formgebung benutzt werden.

Im Ausführungsbeispiel ist in Figur 3 nicht jeder der Zuckerwattegrundkörper durch seitliches Eindrücken durch einen Formstab oder ähnlich geeignetem Gegenstand (Hände, Strohhalm etc.) zu einem Zuckerwatteformkörper transformiert worden. Die genaue Gestaltung der Zuckerwatte in dem Erzeugnis obliegt der Kreativität des Benutzers.

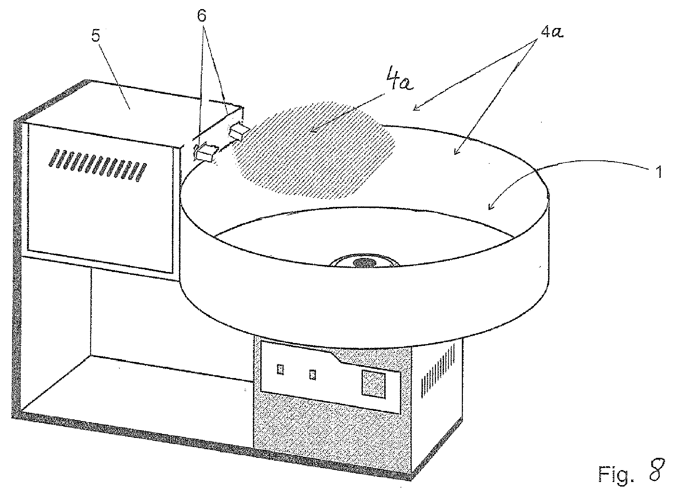

In Figur 8 ist eine weitere Ausführungsvariante der Erfindung dargestellt, bei welcher die Haube über der Zuckerwanne 1 entfällt. Der über der Zuckerwanne 1 befindliche Auffangraum 4a wird von dem Luftbefeuchter 5 über die Düsen 6 mit feuchter Luft mit einer Luftfeuchtigkeit im Bereich von 40 % bis 75 %, vorzugsweise von 50 % bis 60 % versorgt. Durch die Luftfeuchtigkeit in den benannten Bereichen wird eine besonders gute Verformbarkeit der Zuckerwatte bei stabiler Haltbarkeit erreicht.

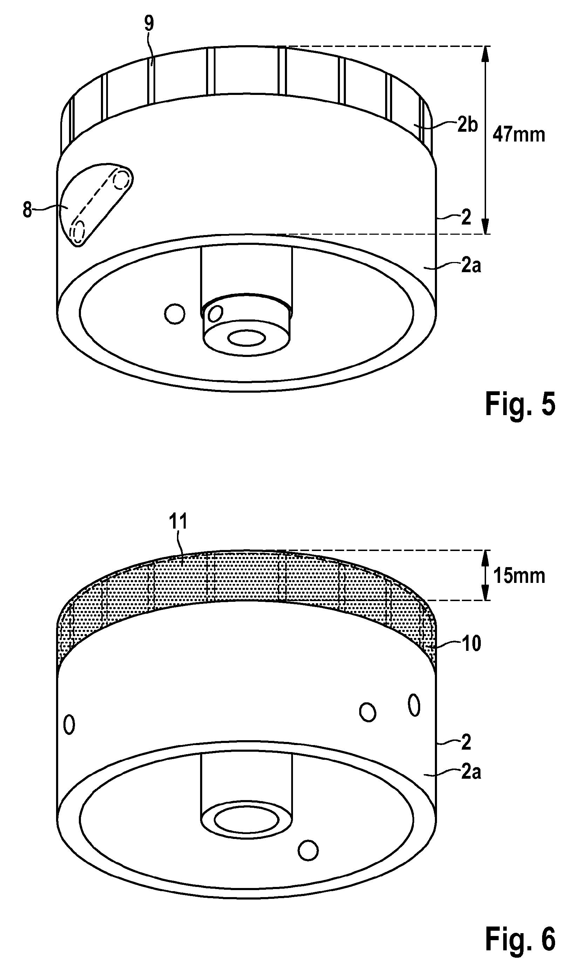

Figur 5 zeigt eine spezielle Gestaltung des Spinnkopfes 2, welcher am oberen Spinnkopfbereich 2b, also dem dem Boden der Zuckerwanne 1 abgewandten Bereich, Austrittsschlitze 9 aufweist. Am unteren Spinnkopfbereich 2a sind schräg angebrachte Flügel 8 angeordnet, welche einer zur Formgebung optimalen Führung der Luft dienen. Die Austrittsschlitze 9 werden, wie in Figur 6 dargestellt, durch eine umlaufende Lochblende 10 abgedeckt. Durch die Löcher 11 der Lochblende 10 tritt der erhitzte Zucker aus. Die Löcher 11 der Lochblende 10 haben einen Durchmesser im Bereich von 0,5 mm bis 0,65 mm. Dieser beträgt im vorliegenden Ausführungsbeispiel 0,6 mm. Die Höhe der Lochblende 10 beträgt in diesem Ausführungsbeispiel 15 mm.

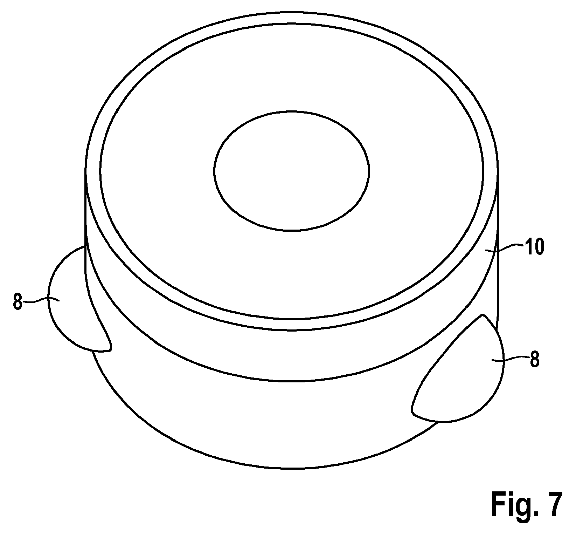

In Figur 7 ist eine Draufsicht auf den Spinnkopf 2 gezeigt, wobei hier die Anordnung der Flügel 8 sowie der Lochblende 10 zu ersehen ist.

### Bezugszeichenliste

- 1: Zuckerwanne
- 2: Spinnkopf
- 3: Haube
- 4: Innenraum
- 5: Luftbefeuchter
- 6: Düse/n
- 7: Leiteinrichtung
- 8: Flügel
- 9: Austrittsschlitz
- 10: Lochblende
- 11: Loch

## Patentansprüche

1. Verfahren zur Formgebung von Erzeugnissen aus Zuckerwatte umfassend die folgenden Verfahrensschritte:
- Erhitzen von Zucker und Erzeugung von Zuckerfäden aus dem geschmolzenen Zucker,
- durch Rotation eines Spinnkopfes Ausbringen der Zuckerfäden in senkrechte Richtung nach oben in einen Auffangraum,
- Auffangen der Zuckerfäden mit mindestens einem in rechtwinkligem oder geneigtem Winkel zu den Zuckerfäden gedrehten Stab zur Herstellung des Zuckerwattegrundkörpers in kugelförmiger, ellipsoidischer, kegelförmiger oder zylindrischer Gestalt,
- **dadurch gekennzeichnet, dass**
- in dem Auffangraum durch zugeführte Feuchtluft eine Luftfeuchtigkeit von 40 % bis 75 %, vorzugsweise zwischen 50 % und 60 %, eingestellt wird und
- unter Einsatz eines weiteren Stabes der Zuckerwattegrundkörper seitlich eingedrückt wird zur Erzeugung eines ersten Zuckerwatteformkörpers,
- auf dem ersten Zuckerwatteformkörper Aufbringen eines zweiten Zuckerwattegrundkörpers und erneutes seitliches Eindrücken zur Erzeugung eines zweiten Zu ckerwatteform körpers
- gegebenenfalls auf dem zweiten und jedem weiteren Zuckerwatteformkörper Aufbringen eines weiteren Zuckerwattegrundkörpers und erneutes seitliches Eindrücken zur Erzeugung eines weiteren Zuckerwatteformkörpers

2. Verfahren nach Anspruch 1, **dadurch gekennzeichnet, dass** die Temperatur zum Erhitzen des Zuckers im Bereich von 100 °C bis 200 °C liegt und vorzugsweise 150 °C beträgt.

3. Verfahren nach mindestens einem der vorhergehenden Ansprüche, **dadurch gekennzeichnet, dass** dem Zucker Lebensmittelfarbstoffe zugegeben werden, um den/die Zuckerwattegrundkörper und/oder Zuckerwatteformkörper einzufärben.

4. Verfahren nach mindestens einem der vorhergehenden Ansprüche, **dadurch gekennzeichnet, dass** die Luftfeuchtigkeit im Auffangraum aus kaltem oder angewärmtem Wasser erzeugt wird.

5. Verfahren nach mindestens einem der vorhergehenden Ansprüche, **dadurch gekennzeichnet, dass** die zugeführte Feuchtluft erwärmt wird, wobei die Temperatur einstellbar ist in einem Bereich von +10 °C bis +40 °C und vorzugsweise 20 °C beträgt.

6. Vorrichtung zur Formgebung von Erzeugnissen aus Zuckerwatte umfassend eine Zuckerwanne (1) mit Spinnkopf (2) und einer Haube (3), **dadurch gekennzeichnet, dass** der Spinnkopf (2) senkrecht angeordnet ist und der von Zuckerwatte und Haube (3) gebildeten Innenraum (4) mit einem Luftbefeuchter (5) verbunden ist.

7. Vorrichtung zur Formgebung von Erzeugnisses aus Zuckerwatte umfassend eine Zuckerwanne (1) mit Spinnkopf (2), wobei der Spinnkopf (2) senkrecht angeordnet ist und der Auffangraum (4a) mit einem Luftbefeuchter (5) verbunden ist.

8. Vorrichtung nach Anspruch 6 oder 7, **dadurch gekennzeichnet dass** die Verbindung zwischen Innenraum (4) oder Auffangraum (4a) und Luftbefeuchter (5) über mindestens eine Düse (6) realisiert ist.

9. Vorrichtung nach Anspruch 6 oder 7, **dadurch gekennzeichnet, dass** der Spinnkopf (2) am unteren Spinnkopfbereich (2a) schräg angeordnete Flügel (8) aufweist.

10. Vorrichtung nach einem der Ansprüche 6 bis 9, **dadurch gekennzeichnet, dass** der Spinnkopf (2) am oberen Spinnkopfbereich (2b) Austrittsschlitze (9) aufweist, welche mit einer umlaufenden Lochblende (10) abgedeckt sind.

11. Vorrichtung nach Anspruch 10, **dadurch gekennzeichnet, dass** die Löcher (11) der Lochblende (10) einen Durchmesser im Bereich von 0,5 mm bis 0,65 mm aufweisen.

12. Vorrichtung nach Anspruch 11, **dadurch gekennzeichnet, dass** der Durchmesser der Löcher (11) 0,6 mm beträgt.

13. Vorrichtung nach Anspruch 10, **dadurch gekennzeichnet, dass** die Höhe der Lochblende (10) 15 mm beträgt.
